Europäisches Patentamt

European Patent Office

Office européen des brevets

(11) Publication number: **0 411 930 A2**

# EUROPEAN PATENT APPLICATION

(21) Application number: **90308481.2**

(22) Date of filing: **01.08.90**

(51) Int. Cl.⁵: **F16K 15/02**

(30) Priority: **04.08.89 GB 8917838**

(43) Date of publication of application:
**06.02.91 Bulletin 91/06**

(84) Designated Contracting States:
**AT BE CH DE DK ES FR GB IT LI NL**

(71) Applicant: **LEIGH STEWART PRODUCTS LIMITED**
**Ibstock Road**
**Coventry, CV6 6JR(GB)**

(72) Inventor: **Russell, John David**
**107 The Heath, Wolvey**
**Hinckley Leicestershire, LE10 3HJ(GB)**

(74) Representative: **Russell, Paul Sidney et al**
**Barker, Brettell & Duncan 138 Hagley Road**
**Edgbastonton**
**Birmingham B16 9PW(GB)**

(54) **Air spa or whirlpool bath system and non-return valve for use therein.**

(57) For an air spa, a non-return valve comprises a closure element comprising a head (22) and a stem (20) which depends from the head through an outlet opening (24) from a chamber (12) of an air supply passage. A stud (18) projects upwards from a resilient diaphragm (16) closing a bottom end of the chamber to become magnetically coupled to the stem (20) of the closure element when the valve is closed. In the closed condition of the valve the diaphragm is displaced upwards to load the head (22) downwards on to a seating around the outlet (24). The effective area of the diaphragm (16) is greater than that of the head (22) and upon operation of a blower air is supplied under pressure to the chamber (12), through an inlet (14), to displace the diaphragm (16) and break the magnetic coupling with the closure element (20, 22). The head (22) can then be lifted by the air pressure to open the valve.

# AIR SPA OR WHIRLPOOL BATH SYSTEM AND NON-RETURN VALVE FOR USE THEREIN

This invention relates to an air spa or whirlpool bath system arranged for an air and/or water stream to be injected into the bath through a valve of the kind referred to hereinafter as a non-return valve of the kind defined.

In a simple form of non-return valve, a movable closure element is arranged to abut a seating, in a closed condition of the valve, to close an outlet from a fluid supply passage. Upon development of a predetermined fluid pressure in the passage on the upstream side of the closure element (that is, over and above an assumed pressure on the downstream side) the element becomes displaced from the seating to open the passage outlet and permit a forwards flow through the open valve. Upon the pressure on the upstream side falling away the closure element becomes returned to the seating, so to close the valve and prevent any return flow through the passage. The element may be arranged to return to the seating by virtue of its weight alone, or return may be assisted or caused by suitable biasing means, for example comprising a return spring. Such a valve is referred to herein as a non-return valve of the kind defined.

Ordinarily the closure element in such a non-return valve is arranged to be displaced from the seating by the developed upstream pressure acting directly on the closure element itself. However, for a given effective area of closure element presented to the fluid supply passage the force with which the closure element can be arranged to abut the seating (i.e. the sealing force) is limited by the available upstream pressure which must act to open the valve.

Non-return valves of the kind defined are used, for example, in so-called air spa and whirlpool bath systems, in which air and/or water streams are injected into baths for specific therapeutic purposes or, more generally, for the pleasant and relaxing effects experienced by the bather. In an air spa system, for example, warm air from a blower can be discharged through a plurality of such non-return valves into the bath, the valves being opened as a consequence of upstream pressure developed in the supply passage by the blower, and the valves closing when the blower is switched off, to prevent water from the bath passing as a return flow through the passage towards the blower.

For such an air spa installation, it could be beneficial to employ a non-return valve which closed more positively than is practically possible where the opening force available is limited by the effective area of the closure element. More positive closure could help to ensure that the closure element remained firmly seated in all normal circumstances in the closed condition of the valve, with benefits both as regards efficient operation and hygiene.

It is an object of the present invention to provide a bath system comprising a non-return valve of the kind defined which enables a greater sealing force to be achieved at the closure element than has ordinarily been possible with such valves as have been used hitherto in such systems.

The invention is characterised in that the closure element is provided by a closure mechanism which comprises biasing means arranged to urge the closure element against the seating in the closed condition of the valve, the biasing means comprising a displaceable operating member which is subject to the pressure within the fluid supply passage for displacement outwardly of the passage caused by an increase in pressure within the passage, the effective area of the operating member exposed to the passage being greater than the effective area of the closure element exposed to the passage in the closed condition of the valve and displacement of the operating member causing or permitting displacement of the closure element from the seating to open the valve.

Since the effective area of the operating member is greater than the effective area of the closure element, a greater opening force is applied to overcome the biasing means than would be applied with the pressure in the supply passage acting against the closure element alone.

The displaceable operating member of the biasing means may conveniently comprise a movable element in the general form of a flexible diaphragm, which is exposed to pressure from the supply passage on one side and atmospheric pressure (ordinarily) on the other. The diaphragm or other operating member may be resiliently supported, or may itself be resilient, in order to bias it against displacement.

The operating member might be fixed to the closure element so that displacement of the operating member is the direct cause of displacement of the closure element from the valve seating to open the valve.

However, in a preferred arrangement the operating member is arranged to be coupled to the closure element in the closed condition of the valve but to become released from the closure element for displacement of the latter (under pressure from the supply passage) independently of the operating member to open the valve. In one preferred such construction, described hereinafter in detail, the operating member and the closure element are magnetically coupled together in the closed condition of the valve, enabling the operating member to urge the closure element firmly against the seating. Upon a predetermined pressure being developed in the fluid supply passage the movable operating member (having the larger effective area) is forced away from the closure element (held by the seating) to break the magnetic coupling, which so releases the closure element to be moved from its seating by the supply pressure.

There now follows a detailed description, to be read with reference to the accompanying drawings, of an air spa bath system which comprises a non-return valve of the kind defined and which illustrates the invention by way of example.

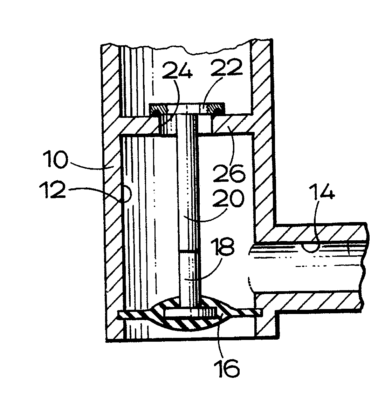

The accompanying drawing is a diagrammatic view in axial cross-section through the valve.

An air spa bath system, of an otherwise conventional kind, comprises a plurality of non-return valves for injecting warm air from a blower into water in the bath.

Each valve comprises a body 10 forming a cylindrical chamber 12. An inlet 14 to the chamber enables air to be introduced from the blower. The chamber 12 and inlet 14 both form part of a fluid supply passage leading from the blower. A lower end of the chamber 12 (as viewed in the drawing) is closed off by a resilient diaphragm 16. The diaphragm 16 carries a stud 18 which projects upwards axially into the chamber 12 and forms a first component of a magnetic coupling arrangement for maintaining the valve closed; the diaphragm 16 and the stud 18 together form a displaceable operating member of biasing means of a closure mechanism of the valve. The upper (inner) surface of the diaphragm 16 is so exposed to the pressure within the chamber 12, and the underside is subjected to atmospheric pressure.

A second component of the magnetic coupling arrangement comprises an axially depending stem 20 of a closure element of the closure mechanism. The closure element comprises an enlarged head 22 positioned above an opening 24 in an upper end wall 26 of the chamber 12; the opening 24 forms an outlet from the supply passage from the blower. A seating is formed upon an upper surface of the wall 26 around the opening 24, and an annular lower surface of the head 22 is arranged to bear down against the seating to seal the opening 24 when the valve is in a closed condition. The stem 20 of the closure element extends down from the head 22, through the opening 24, to a position adjacent to the upper end of the upwardly and oppositely projecting stud 18. One or other, or both, of a lower end portion of the stem 20 and an opposing upper end portion of the stud 18 are suitably magnetised so as to be attracted to one another. In the closed condition of the valve the two are drawn together to load the resilient diaphragm 16 of the operating member upwards and the head 2 of the closure element downwards on to the seating. The head 22 is so loaded by the upwardly displaced operating member to bear down firmly on the seating and create a good seal, the stud 18 and stem 20 being joined together by the magnetic coupling.

As is apparent from the drawing, the effective area of the displaceable operating member exposed to the supply passage is greater than the effective area of the closure element exposed to the passage in the closed condition of the valve. The force urging outwards (downwards) displacement of the operating member when the chamber 12 is pressurised is therefore greater than the force urging outwards (upwards) displacement of the closure element (i.e. to lift the closure element from its seating). By this means it is arranged that the closure element can be loaded more heavily against the seating than would be possible if the supply pressure in the chamber 12 were to act against the relatively small closure element alone to open the valve. Upon the blower being switched on and air supply pressure being developed in the chamber 12, the force on the operating member is sufficient to displace the diaphragm 16 and stud 18 downwards away from the stem 20 of the closure element and break the magnetic coupling; the closure element cannot be displaced downwards since its head 22 bears against the seating. Once the coupling is broken, and the downwards loading so taken off the closure element, the supply pressure acts to lift the closure element off the valve seating to open the valve.

Upon the air supply pressure falling away when the blower is switched off, the resilient diaphragm 16 returns (rises) to its relaxed condition and the closure element falls (or is urged by bath water pressure) back on to the seating to prevent any return flow through the valve. The stem 20 and the stud 18 so come sufficiently close together for the magnetic coupling to become effective once again, drawing the two together and urging the head of the closure element down firmly against the seating.

## Claims

1. An air spa or whirlpool bath system arranged for an air and/or water stream to be injected into the bath through a non-return valve of the kind defined, characterised in that the closure element (20,22) is provided by a closure mechanism which comprises biasing means arranged to urge the closure element against the seating in the closed condition of the valve, the biasing means comprising a displaceable operating member (16, 18) which is subject to the pressure within the fluid supply passage (12) for displacement outwardly of the passage caused by an increase in pressure within the passage, the effective area of the operating member exposed to the passage being greater than the effective area of the closure element exposed to the passage in the closed condition of the valve and displacement of the operating member causing or permitting displacement of the closure element from the seating to open the valve.

2. A bath system according to claim 1 in which the operating member (16,18) comprises a flexible diaphragm (16) which on one side is exposed to pressure from the supply passage.

3. A bath system according to claim 2 in which the diaphragm (16) is exposed on its other side to atmospheric pressure.

4. A bath system according to either of claims 2 and 3 in which the diaphragm (16) is itself resilient in order to bias it against displacement.

5. A bath system according to any one of claims 1 to 4 in which the operating member (16, 18) is arranged to be coupled to the closure element (20, 22) in the closed condition of the valve but to become released from the closure element for displacement of the latter independently of the operating member to open the valve.

6. A bath system according to claim 5 in which the operating member (16, 18) and the closure element (20,22) are magnetically coupled in the closed condition of the valve to urge the closure element against the seating, the operating member being arranged to be displaced to break the magnetic coupling upon a predetermined supply pressure being developed in the fluid supply passage (12), so permitting the closure element to be displaced from the seating by the supply pressure.

7. A non-return valve of the kind defined, characterised in that the closure element (20,22) is provided by a closure mechanism which comprises biasing means arranged to urge the closure element against the seating in the closed condition of the valve, the biasing means comprising a displaceable operating member (16, 18) which is subject to the pressure within the fluid supply passage (12) for displacement outwardly of the passage caused by an increase in pressure within the passage, the effective area of the operating member exposed to the passage being greater than the effective area of the closure element exposed to the passage in the closed condition of the valve and displacement of the operating member permitting displacement of the closure element from the seating to open the valve, the operating member (16, 18) and the closure element (20,22) being magnetically coupled in the closed condition of the valve to urge the closure element against the seating, the operating member being arranged to be displaced to break the magnetic coupling upon a predetermined supply pressure being developed in the fluid supply passage (12), so permitting the closure element to be displaced from the seating by the supply pressure.